# FASCICULE DE BREVET EUROPEEN

(11) **EP 1 370 791 B1**
(45) Date de publication et mention de la délivrance du brevet: **05.03.2008**
(21) Numéro de dépôt: 02714302.3
(22) Date de dépôt: 15.03.2002
(51) Int. Cl.: F16K 37/00, F16L 41/03

(54) **ORGANE DE JONCTION POUR CIRCUIT HYDRAULIQUE**
VERBINDUNGSELEMENT FÜR HYDRAULISCHES SYSTEM
JUNCTION ELEMENT FOR A HYDRAULIC CIRCUIT

(30) Priorité: 20.03.2001 FR 0103751
(43) Date de publication de la demande: 17.12.2003
(73) Titulaire: LEGRIS SA, 35000 Rennes (FR)
(72) Inventeur: GENDRIN, Stéphane, F-35170 Bruz (FR); POIRIER, Pierre-Emmanuel, F-35760 Saint-Gregoire (FR); BLIVET, Philippe, F-35200 Rennes (FR)
(74) Mandataire: Robert, Jean-Pierre
(86) Numéro de dépôt international: PCT/FR2002/000929
(87) Numéro de publication internationale: WO 2002/075193

(56) Documents cités:
- WO-A-97/33118
- GB-A- 2 207 723
- US-A- 5 911 155

## Description

La technologie moderne de gestion de la circulation des fluides -notamment dans un véhicule automobile-met en oeuvre de nombreux capteurs permettant de transmettre à un ou des calculateurs, des valeurs instantanées de paramètres tels que la température du fluide, sa pression, sa viscosité...

Il convient donc d'équiper certaines au moins des branches d'un circuit hydraulique avec ces capteurs et donc d'incorporer dans le circuit des supports appropriés d'une part à maintenir la continuité du circuit à l'égard du fluide et d'autre part à maintenir la partie sensible du capteur au sein même du fluide à contrôler.

Chaque constructeur automobile a mis au point son propre système pour gérer des circulations de fluide globalement semblables d'un véhicule à l'autre, à partir de points de mesure qui, en réalité, diffèrent sensiblement d'un véhicule à l'autre. Ainsi par exemple, en ce qui concerne le circuit de carburant, il convient de contrôler la température de ce dernier sur la canalisation de retour au réservoir du carburant en excédent, qui provient des injecteurs de la pompe d'injection ou même du filtre. Certains systèmes se satisfont de connaître la température du carburant provenant des injecteurs, d'autres impliquent de connaître la température du carburant avant son retour commun au réservoir. Ces exigences différentes impliquent des montages différents pour les capteurs à mettre en place. Les fabrications des équipementiers sont alors délicates à rationaliser pour satisfaire l'ensemble d'une demande très diversifiée. Les documents GB-A-2 207 723 et WO-A-9733118 illustrent deux architectures possibles d'organes de jonction équipées de capteurs, chacune liée à une application précise. La figure 2 reprend la disposition connue du document WO-A- 9733118.

Par la présente invention, on entend remédier au moins partiellement à cette difficulté en proposant un élément de circuit de fluide hydraulique dont la fonction est de rassembler en un corps les diverses canalisations susceptibles d'être équipées d'un capteur afin de pouvoir rationaliser la fabrication de ce corps qui recevra au moins un capteur de manière unique.

Plus précisément, l'invention a pour objet un organe de jonction pour circuit de fluide hydraulique selon la revendication 1.

Un avantage de cet organe de jonction réside dans le fait qu'il constitue un point unique d'intervention sur le circuit de fluide, ce qui facilite l'entretien et la maintenance notamment lorsque ce circuit est parcouru par du carburant de véhicule automobile.

Le support du capteur étant en forme d'un embout connectable avec une partie active de capteur à l'extrémité de cet embout, les canaux internes du corps de l'organe de jonction selon l'invention comprennent une chambre dont une paroi comporte les moyens de connexion du support du capteur dans une position telle que la partie active de ce dernier soit située dans la chambre. On a, de cette manière, réalisé une interface unique de pose du capteur quelles que soient les jonctions à réaliser entre les différents flux de fluide aboutissant ou sortant de l'organe de jonction de l'invention. En outre, la présence de ce canal d'évitement permet plusieurs utilisations de l'organe de jonction de l'invention selon que l'on souhaite capter une valeur de paramètre d'un flux seul ou d'un mélange de flux.

Enfin il sera avantageux que la connexion du corps et du support de capteur soit tournante et que les moyens de connexion du corps aux diverses canalisations extérieures soient situés dans un plan contenant l'axe de connexion du support au corps.

D'autres caractéristiques et avantages de l'invention ressortiront de la description qui en est donnée ci-après de quelques exemples de réalisation.

Il sera fait référence aux dessins annexés parmi lesquels :
- la figure 1 illustre de manière générale, en coupe, un arrangement à connexions multiples mettant en oeuvre l'organe de jonction selon l'invention,
- la figure 2 illustre une disposition connue de l'art antérieur et qui n'est pas selon l'invention,
- les figures 3, 4 et 5 illustrent par des coupes différentes réalisations possibles du corps de l'organe de jonction selon l'invention.

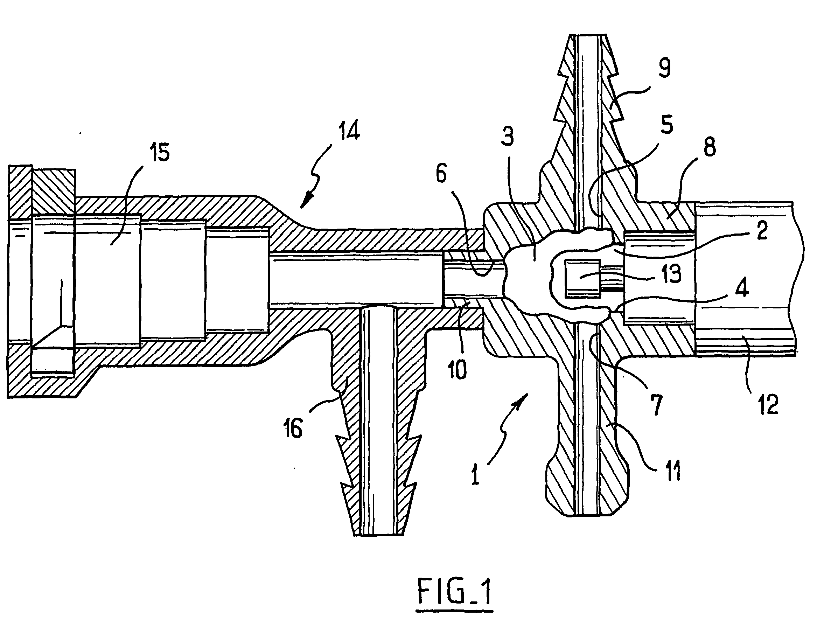

A la figure 1 on a représenté un organe de jonction selon l'invention qui comporte un corps 1 dans lequel est ménagé un système de canaux internes 2 et 3 qui seront définis ultérieurement, ce système de canaux internes débouchant vers l'extérieur du corps 1 par des orifices 4, 5, 6 et 7, chacun ménagé dans des organes de connexion 8, 9, 10, 11. L'organe de connexion 8 est apte à coopérer avec le support 12 d'au moins un capteur 13 d'un paramètre physique du fluide circulant dans le système de canaux internes du corps 1 (par exemple la température). L'organe de connexion 9 est constitué par un embout à dents de sapin apte à recevoir l'extrémité d'une canalisation extérieure de manière connue. Le dispositif de connexion 10 est prévu pour être équipé, dans le cas de la figure, d'une pièce 14 standard de circuit hydraulique qui forme un raccord en T avec à l'une de ses extrémités, des moyens de couplage 15 et de verrouillage d'un embout approprié et un piquage 16 logés dans un embout à dents de sapin pour l'emmanchement d'une canalisation extérieure. Enfin, l'organe de connexion 11 est de la forme classique d'un embout avec une extrémité renflée pour recevoir une canalisation qui lui est assujettie en particulier avec un collier de serrage.

Il s'agit là d'un exemple de réalisation de l'organe de jonction selon l'invention qui peut souffrir de nombreuses variantes de réalisation. En particulier, l'organe 14 peut être tout à fait différent et se résumer par exemple à un embout à queue de sapin ou renflé, en une seule pièce avec le corps 1.

Le système de canaux internes 2 et 3 du corps 1 peut affecter plusieurs formes de réalisations.

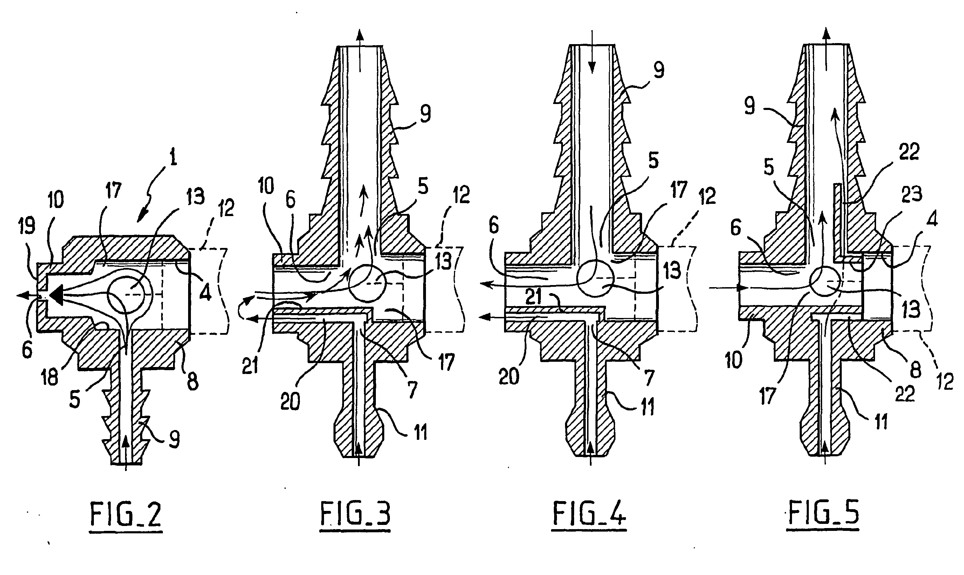

A la figure 2 qui décrit un art antérieur et dont la réalisation n'est pas selon l'invention, on notera que le corps 1 ne possède que deux organes de connexion à des canalisations extérieures à savoir un embout à queue de sapin 9 et l'organe 10 auquel peut être rapporté par exemple l'élément 14. Les canaux internes se résument à une chambre 17 qui communique avec l'extérieur par les orifices 4, 5 et 6, l'orifice 4 étant ménagé d'un côté de la chambre dans une paroi pour recevoir le support 12 du capteur 13, les orifices 5 et 6 étant ménagés dans d'autres parois 18, 19 de la chambre 17. On notera que l'orifice 6 ménagé dans la paroi 19 de la chambre 19 constitue une restriction pour une circulation de fluide provenant de l'orifice 5 et traversant la chambre 17. Cette restriction a pour objet d'isoler le flux provenant de l'orifice 5 d'un autre flux qui viendrait par exemple d'une canalisation connectée au support 14 par les moyens 15 (voir la figure 1). La somme des débits venant d'une part de l'orifice 5 et d'autre part de la connexion 15, est évacuée en direction par exemple d'un réservoir d'essence si le fluide est du carburant, au travers de l'embout 16 à dent de sapin de l'organe de jonction en T 14. Le corps 1 de la figure 2 permet donc de capter par exemple la température d'un seul des flux, ce pour répondre à une demande particulière d'un utilisateur.

Si la demande de l'utilisateur est de connaître par exemple la température de deux flux après leur mélange, il suffit de prévoir le même corps 1 que celui représenté à la figure 1 avec un plus grand orifice 6 au travers de la paroi 19 et de recevoir dans la chambre 17 les deux flux après leur mélange, ces flux parvenant à cette chambre au moyen de l'organe en T 14 de la figure 1. L'évacuation du mélange se ferait alors dans le sens contraire de celui indiqué à la figure 2 au travers de l'embout 9 par l'orifice 5.

Dans le cas de la figure 3, le corps 1 possède comme à la figure 1 un embout à dent de sapin 9 et un embout à extrémité renflée 11. L'orifice 7 qui traverse l'embout 11 débouche dans un canal 20 d'évitement de la partie de chambre 17 dans laquelle est logé le capteur 13, ce canal reliant l'orifice 7 à l'orifice 6. Ce canal d'évidement 20 est réalisé par un cloisonnement 21 de la chambre 17.

Avec un corps ainsi constitué, on peut admettre dans la chambre 17 un flux qui provient du mélange du liquide pénétrant dans le corps 1 par l'orifice 7 et conduit au niveau de l'orifice 6 par le canal d'évitement 20 à la rencontre d'un flux entrant dans le corps 1 par cet orifice 6, flux qui peut lui-même être composite si le corps 1 est associé comme à la figure 1 à un élément 14. La valeur du paramètre qui sera captée dans la chambre 17 par le capteur 13 correspondra à une caractéristique du mélange de tous les flux dont l'évacuation s'opérera par l'orifice 5 traversant l'embout à dents de sapin 9.

A la figure 4, le corps 1 représenté est identique à celui de la figure 3. Il est simplement utilisé différemment puisque deux flux pénètrent dans le corps 1, l'un par l'orifice 5 l'autre par l'orifice 7, et se réunissent en courant parallèle au niveau de l'orifice 6 pour être évacués soit par un embout unique soit par une jonction en T dans laquelle, comme à la figure 1, il peut s'additionner à un flux pénétrant par l'un ou l'autre des embouts 15, 16 du corps 14. On comprend que dans ces conditions, le corps de l'élément de jonction selon l'invention permet de recueillir une information sur le paramètre physique d'un seul des flux du circuit hydraulique à gérer.

A la figure 5 enfin, on aura noté que l'orifice 7 est prolongé par un canal d'évitement 22 ménagé dans le corps 1 par un cloisonnement 23 différent de la chambre 17, cloisonnement qui permet de relier l'orifice 7 à l'orifice 5. Le support 12 du capteur 13 participe dans le cas présent à la définition du canal d'évitement 22 qui est un canal annulaire à l'intérieur de la chambre 17. On comprend que dans ces conditions le capteur 23 n'est intéressé que par le flux de liquide pénétrant dans le corps 1 par l'orifice 6 et que le mélange total des deux flux se fait au-delà de la chambre 17 en direction par exemple d'un réservoir d'essence connecté à l'embout 9.

Il peut être intéressant de réaliser la connexion du support 12 au moyen 8 de connexion du corps 1 de manière tournante par tout moyen connu. Dans ce cas, toutes les autres connexions du corps 1 seront avantageusement situées dans un même plan (par exemple le plan de coupe des figures) contenant l'axe autour duquel le support de capteur peut tourner par rapport au corps 1. Cette disposition rend l'accès à l'organe de jonction plus aisé tant sur le plan hydraulique que sur le plan électrique.

## Revendications

1. Organe de jonction de circuit de fluide hydraulique comportant un corps (1) pourvu de canaux internes (2,3), chacun débouchant vers l'extérieur par un orifice (4, 5, 6, 7) , pourvu d'un organe (8, 9, 10, 11) de connexion, trois (5, 6, 7 ) de ces orifices étant raccordés par leur organe de connexion (9,10,11) chacun à l'une des trois canalisations extérieures et un de ces orifices (4) coopérant avec le support (12) d'au moins un capteur (13) d'une caractéristique physique du fluide circulant dans l'un des canaux internes (2, 3) du corps, le support (12) du capteur (13) étant en forme d'un embout connectable, une partie active du capteur (13) étant située à l'extrémité de cet embout, les canaux internes du corps comprenant une chambre (17) dont une paroi comporte l'orifice (4) pourvu de l'organe (8) de connexion du support (12) du capteur (13), ledit support (12) du capteur (13) supportant le capteur (13) dans une position telle que la partie active de ce dernier soit située dans la chambre (17) et dont une paroi (18,19) est pourvue d'un premier (5) et d'un deuxième (6) orifices desdits trois orifices (5,6,7), les canaux internes comprenant en outre un canal d'évitement (20) de la partie active du capteur (13) délimité par un élément de cloisonnement de la chambre (17) et reliant un troisième orifice (7) desdits trois orifices (5,67) à l'un desdits premier (5) et deuxième (6) orifices.

2. Organe de jonction selon la revendication 1, **caractérisé en ce que** la connexion (8) du corps (1) au support (12) de capteur est tournante.

3. Organe de jonction selon la revendication 2, **caractérisé en ce que** les axes des moyens de connexion (9, 10, 11) du corps sont dans un plan contenant l'axe de la connexion (8) du support (12) de capteur au corps (1).

## Claims

1. A junction member for a hydraulic-fluid circuit, comprising a body (1) provided with internal channels (2,3) each opening to the outside through an outlet (4,5,6,7) including a connection means (8,9,10,11), three (5,6,7) of said outlets being connected by means of their connection means (9,10,11) each to one of three external pipes and one of said outlets (4) cooperating by means of its connection means (8) with the support (12) of at least one sensor (13) for sensing a physical characteristic of the fluid flowing through one of the internal channels (2,3) of the body, said support (12) of said sensor (13) being in a form of a spigot having an end provided with an active portion of the sensor (13), said internal channels including a chamber (17) having a wall that includes the outlet (4) provided with connection means (8) for said support (12) of the sensor (13) in such a position that the active portion of the sensor is situated in the chamber (17) and having a wall (18, 19) that includes a first (5) and a second (6) outlets of said three outlets (5,6,7), said internal channels having a by pass channel (20) so as to avoid the active portion of the sensor (13), said by pass channel being formed by a partitioning element for portioning the chamber (17) and connecting the third outlet (7) of said three outlets (5,6,7) to one of said first (5) and second (6) outlets.

2. A junction member according to claim 1, **characterized in that** the connection (8) for the body (1) to the sensor support (12) is a rotary connection.

3. A junction member according to claim 2, **characterized in that** the axes of the connection means (9, 10, 11) of the body are in a plane containing the axis of the connection means (8) for connecting the sensor support (12) to the body (1).

## Patentansprüche

1. Verbindungselement für einen Hydraulikfluidkreis, umfassend ein Gehäuse (1), das mit Innenkanälen (2, 3) versehen ist, die jeweils über eine Öffnung (4, 5, 6, 7) nach außen münden, die mit einem Anschlusselement (8, 9, 10, 11) versehen ist, wobei drei (5, 6, 7) dieser Öffnungen durch ihr jeweiliges Anschlusselement (9, 10, 11) mit einem von drei Außenkanälen verbunden sind und eine dieser Öffnungen (4) über ihr Anschlusselement (8) mit dem Träger (12) mindestens eines Sensors (13) zum Erfassen einer physikalischen Eigenschaft des Fluids zusammenwirkt, das in einem der Innenkanäle (2, 3) des Gehäuses zirkuliert, wobei der Träger (12) des Sensors (13) die Form eines anschließbaren Ansatzstutzens hat, wobei sich ein aktiver Teil des Sensors (13) am Ende dieses Ansatzstutzens befindet, wobei die Innenkanäle des Gehäuses eine Kammer (17) umfassen, von der eine Wand die Öffnung (4) umfasst, die mit dem Anschlusselement (8) zum Anschluss des Trägers (12) des Sensors (13) versehen ist, wobei der Träger (12) des Sensors (13) den Sensor (13) in einer solchen Position trägt, dass sich der aktive Teil dieses Letztgenannten in der Kammer (17) befindet, und von der eine Wand (18, 19) mit einer ersten Öffnung (5) und einer zweiten Öffnung (6) der genannten drei Öffnungen (5, 6, 7) versehen ist, wobei die Innenkanäle ferner einen zum Umgehen des aktiven Teils des Sensors (13) vorgesehenen Umgehungskanal (20) umfassen, der durch ein Trennelement der Kammer (17) begrenzt wird und eine dritte Öffnung (7) der genannten drei Öffnungen (5, 6, 7) mit der genannten ersten Öffnung (5) oder der zweiten Öffnung (6) verbindet.

2. Verbindungselement nach Anspruch 1, **dadurch gekennzeichnet, dass** der Anschluss (8) des Gehäuses (1) am Sensorträger (12) drehbar ist.

3. Verbindungselement nach Anspruch 2, **dadurch gekennzeichnet, dass** sich die Achsen der Anschlussmittel (9, 10, 11) des Gehäuses in einer Ebene befinden, welche die Achse des Anschlusses (8) des Sensorträgers (12) am Gehäuse (1) enthält.
